# EUROPEAN PATENT APPLICATION

(11) **EP 4 470 803 A1**
(43) Date of publication of application: **04.12.2024**
(21) Application number: 24178702.7
(22) Date of filing: 29.05.2024
(51) Int. Cl.: B60G 3/14, B60G 21/05

(54) **TRAVEL UNIT**

(30) Priority: 30.05.2023 JP 2023089059
(71) Applicant: Tsubakimoto Chain Co., Osaka 530-0005 (JP)
(72) Inventor: Saito, Yusuke, Osaka, 530-0005 (JP)
(74) Representative: dompatent von Kreisler Selting Werner - Partnerschaft von Patent- und Rechtsanwälten mbB

(57) **Abstract**

An object is to provide a travel unit that can suppress, with a simple configuration, production cost and the frequency of maintenance, mitigate adverse external influences such as impact and foreign matter, and allows a high degree of freedom in the device layout. A travel unit includes a main body, a pair of left and right swing arms provided on a rotation transmission unit in such a manner as to be swingable about a swing shaft, and wheels provided on the swing arms. The rotation transmission unit includes: a swing gear configured to rotate in conjunction with one of the swing arms; a swing sprocket configured to rotate in conjunction with the other swing arm; a transmission gear meshing with the swing gear; and a transmission sprocket configured to transmit rotation to the swing sprocket via a transmission chain. The transmission gear and the transmission sprocket are connected by a coupling shaft, and the swing gear and the swing sprocket are configured to be rotatable in conjunction with each other in mutually opposite directions.

## Description

### BACKGROUND OF THE INVENTION

### 1. Field of the Invention

The present invention relates to a travel unit including a main body, a rotation transmission unit connected to the main body, a pair of left and right swing arms provided on the rotation transmission unit in such a manner as to be swingable about a swing shaft, and wheels respectively provided on the swing arms.

### 2. Description of the Related Art

A travel unit including a main body, a pair of left and right swing arms provided in such a manner as to be swingable about a swing shaft, and wheels respectively provided on the swing arms as described in Japanese Patent No. 4567813, for example, has been conventionally known.

A multiple wheel vehicle 1 provided with the travel unit described in Japanese Patent No. 4567813 includes a main body (frame 2), a pair of left and right swing arms (swing arms 4L and 4R) provided in such a manner as to be swingable about a swing shaft (support shaft portion 3A) relative to the main body (frame 2), and wheels (5L and 5R) respectively provided on the swing arms (swing arms 4L and 4R). The swing shaft (support shaft portion 3A) is provided with substantially fan-shaped tilted members 17L and 17R; and circular surface parts 21 of the tilted members 17L and 17R are each connected to a balance-like or pulley-like change-direction member 19 via a cord-like body 20.

With this configuration, the tilted members 17L and 17R can be moved in conjunction with each other, and when one of the wheels (5L, 5R) is pushed up by a force applied from a road surface, it is possible to press down the other wheel (5L, 5R) toward the road surface via the swing shaft (support shaft portion 3A) and the swing arms (4L and 4R), and when the vehicle turns, changes a traveling direction thereof, or is traveling on a road surface sloping in the lateral direction, it is possible to tilt the wheels (5L and 5R), as desired, together with the vehicle body while keeping ground-contacting-pressures of the wheels (5L and 5R) equal to each other.

### SUMMARY OF THE INVENTION

However, there is still room for improvement in the known travel unit described in the above-mentioned patent document, for example.

That is, the known travel unit described in Japanese Patent No. 4567813, for example, is configured to move the pair of left and right wheels in conjunction with each other with use of the change-direction member, the tilted members, and the cord-like body, and therefore, the travel unit includes many driving units and is complex, and there is a risk that the production cost and the frequency of maintenance such as greasing up may increase.

Also, the change-direction member, the tilted members, and the cord-like body are exposed, and therefore, there is a risk that an external impact may be directly applied to these members or foreign matter may be caught by these members and cause problems.

Also, the left and right wheels are configured to move in conjunction with each other by connecting the balance-like or pulley-like change-direction member to the left and right tilted members via the cord-like body, and therefore, the change-direction member and the tilted members need to have predetermined sizes and be spaced apart from each other by a predetermined distance, hence there is a risk that the degree of freedom in the device layout may decrease.

The present invention solves these problems, and has an object of providing a travel unit that can suppress, with a simple configuration, the production cost and the frequency of maintenance, mitigate adverse external influences such as impact and foreign matter, and allows a high degree of freedom in the device layout.

A travel unit according to the present invention solves the above-described problems with a configuration including a main body, a rotation transmission unit connected to the main body, a pair of left and right swing arms provided on the rotation transmission unit in such a manner as to be swingable about a swing shaft, and wheels respectively provided on the swing arms, wherein the rotation transmission unit includes: a swing gear configured to rotate in conjunction with swing of one of the swing arms; a swing sprocket configured to rotate in conjunction with swing of the other of the swing arms; a transmission gear meshing with the swing gear to transmit rotation; and a transmission sprocket configured to transmit rotation to the swing sprocket via a transmission chain, the transmission gear and the transmission sprocket are connected by a coupling shaft coupling rotation axes of the transmission gear and the transmission sprocket, and the swing gear and the swing sprocket are configured to be rotatable in conjunction with each other in mutually opposite directions.

A travel unit according to claim 1 has the configuration in which the rotation transmission unit includes: the swing gear configured to rotate in conjunction with swing of one of the swing arms; the swing sprocket configured to rotate in conjunction with swing of the other swing arm; the transmission gear meshing with the swing gear to transmit rotation; and the transmission sprocket configured to transmit rotation to the swing sprocket via the transmission chain. The transmission gear and the transmission sprocket are connected by the coupling shaft coupling rotation axes thereof, and the swing gear and the swing sprocket are configured to be rotatable in mutually opposite directions in conjunction with each other. Accordingly, when one of the wheels swings upward due to road surface conditions and one of the swing arms swings, for example, the rotation transmission unit can cause the other swing arm to swing downward and thus cause the other wheel to swing downward in conjunction with the swing of the one wheel.

Conversely, when only the other wheel swings upward, it is possible to cause the one wheel to swing downward in conjunction with the swing of the other wheel via the rotation transmission unit.

With this configuration, the rotation transmission unit can change heights of the pair of left and right wheels according to inclination of the vehicle body in the left-right direction, unevenness of the road surface, and the state of a sloping surface, and surely bring both the left and right wheels into contact with the ground to improve travel stability.

Also, the rotation transmission unit includes the swing gear, the swing sprocket, the transmission gear meshing with the swing gear to transmit rotation, and the transmission sprocket configured to transmit rotation to the swing sprocket via the transmission chain, and the transmission gear and the transmission sprocket are connected by the coupling shaft coupling rotation axes thereof. Accordingly, it is possible to surely cause the one swing arm and the other swing arm to swing by the same amount in different directions in conjunction with each other by setting the gear ratio between the swing gear and the transmission gear to 1:1 and setting the ratio between the number of teeth of the swing sprocket and the number of teeth of the transmission sprocket to 1:1.

Also, the components for moving the left and right wheels in conjunction with each other in swing directions can be gathered in the rotation transmission unit, and therefore, it is possible to save space and increase the degree of freedom in the layout of the travel unit.

According to the configuration described in claim 2, a box-like housing part houses at least the swing gear, the swing sprocket, the transmission gear, the transmission chain, and the transmission sprocket. Therefore, it is possible to prevent grease applied to the components housed in the housing part to move the left and right wheels in conjunction with each other in the swing directions from flowing to the outside, prevent foreign matter and the like from entering from the outside, and reduce the frequency of maintenance such as greasing up.

Also, operation sound generated from the components housed in the housing part can be kept from leaking to the outside.

According to the configuration described in claim 3, the main body and the rotation transmission unit are connected by a swingable connection part for connection in a swingable manner and also connected by a buffer connection part for connection via a buffer member. Therefore, the buffer member can suppress transmission of an impact applied from the ground when the wheels of the travel unit are in contact with the ground, to the main body.

According to the configuration described in claim 4, the transmission chain is constituted by a chain having an end that is connected to the swing sprocket and another end that is connected to the transmission sprocket. Therefore, each sprocket may have a fan shape and be provided only in a range in which the sprocket meshes with the chain having those ends, for example, to reduce the weight of the rotation transmission unit and the space required to house the sprockets.

Moreover, by adjusting the length of the transmission chain having those ends to limit rotation amounts of the swing sprocket and the transmission sprocket, it is possible to limit the maximum swing amount of the pair of left and right wheels and prevent the wheels from jumping up excessively.

According to the configuration described in claim 5, the transmission chain is an endless chain. Therefore, even when diameters of the swing sprocket and the transmission sprocket are reduced, it is possible to transmit large swing of one of the swing arms to the other swing arm. Accordingly, it is possible to further downsize the rotation transmission unit to further save the space and increase the degree of freedom in the layout of the travel unit.

### BRIEF DESCRIPTION OF THE DRAWINGS

FIG. 1 is a perspective view of a travel unit 100 according to an embodiment of the present invention;
FIG. 2 is a top view of the travel unit 100 according to the embodiment of the present invention;
FIG. 3 is a front view of the travel unit 100 according to the embodiment of the present invention;
FIG. 4 is a side view of the travel unit 100 according to the embodiment of the present invention;
FIG. 5 is an A-A' cross-sectional view of the travel unit 100 according to the embodiment of the present invention;
FIG. 6 is a side view of the travel unit 100 according to the embodiment of the present invention showing a state where a first wheel 113a swings upward;
FIG. 7 is a front view of the travel unit 100 according to the embodiment of the present invention showing the state where the first wheel 113a swings upward;
FIG. 8 is a side view of the travel unit 100 according to the embodiment of the present invention showing the state of the first wheel 113a side when the first wheel 113a swings upward;
FIG. 9 is an A-A' cross-sectional view of the travel unit 100 according to the embodiment of the present invention showing the state of a second wheel 113b side when the first wheel 113a swings upward; and
FIG. 10 is an A-A' cross-sectional view of the travel unit 100 according to the embodiment of the present invention showing a configuration example of a rotation transmission unit 120 in a case where transmission chains 126a and 126b having ends are used.

### DESCRIPTION OF THE PREFERRED EMBODIMENTS

The following describes a travel unit 100 according to an embodiment of the present invention with reference to the drawings.

Note that the travel unit 100 is attached to a travel vehicle, and a pair of left and right wheels 113 function as rear wheels, but configurations other than the travel unit 100 are not illustrated for the sake of description.

Also, walls covering side surfaces of a rotation transmission unit 120 are not illustrated for the sake of description.

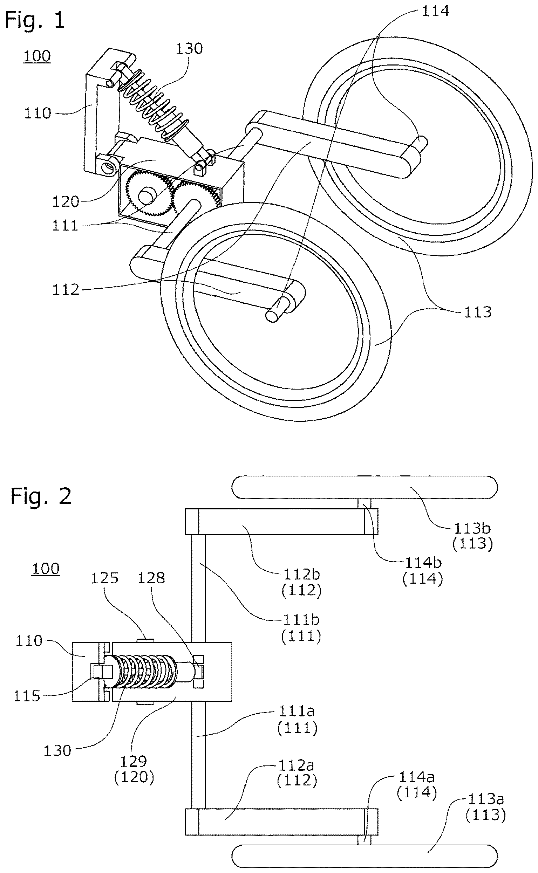

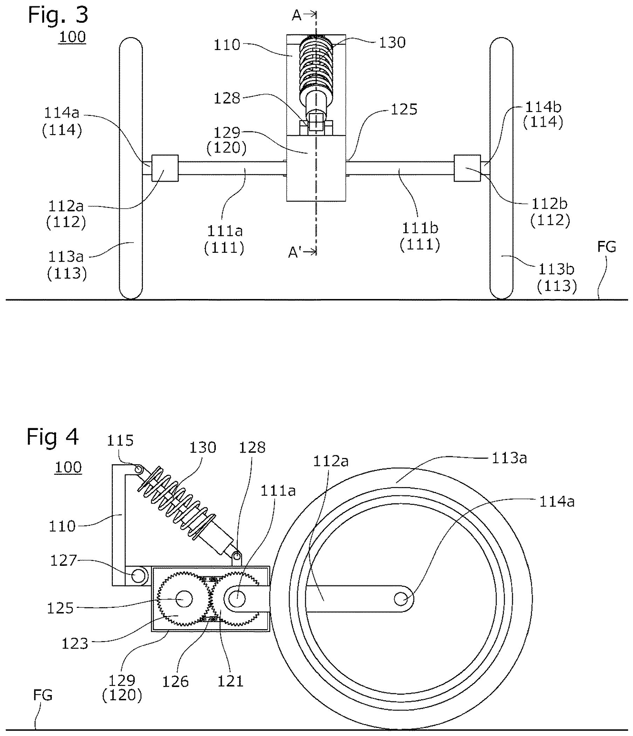

As shown in FIGS. 1 to 5, the travel unit 100 according to the embodiment of the present invention includes a main body 110, the rotation transmission unit 120 connected to the main body 110, a pair of left and right swing arms 112 (a first swing arm 112a and a second swing arm 112b) provided on the rotation transmission unit 120 in such a manner as to be swingable about a swing shaft 111 (a first swing shaft 111a and a second swing shaft 111b), wheels 113 (a first wheel 113a and a second wheel 113b) respectively connected to the swing arms 112 in such a manner as to be rotatable about rotation shafts 114 (a first rotation shaft 114a and a second rotation shaft 114b), and a buffer member 130 connecting the main body 110 and the rotation transmission unit 120.

The rotation transmission unit 120 is connected to the main body 110 in a swingable manner via a box-like housing part 129 and a main body connecting shaft 127, which is a swingable connection part, and includes a swing gear 121 that is connected to the first swing arm 112a by the first swing shaft 111a, a swing sprocket 122 that is connected to the second swing arm 112b by the second swing shaft 111b, a transmission gear 123 that meshes with the swing gear 121 and transmits rotation, and a transmission sprocket 124 that transmits rotation to the swing sprocket 122 via a transmission chain 126 that is an endless chain.

The transmission gear 123 and the transmission sprocket 124 are connected by a coupling shaft 125 that couples rotation axes of the transmission gear and the transmission sprocket.

Note that at least the swing gear 121, the swing sprocket 122, the transmission gear 123, the transmission chain 126, and the transmission sprocket 124 are housed in the housing part 129.

The buffer member 130 is connected to the main body 110 in a swingable manner via a support shaft 115, which is a buffer connection part, and is connected to the housing part 129 of the rotation transmission unit 120 in a swingable manner via a buffer member connecting shaft 128.

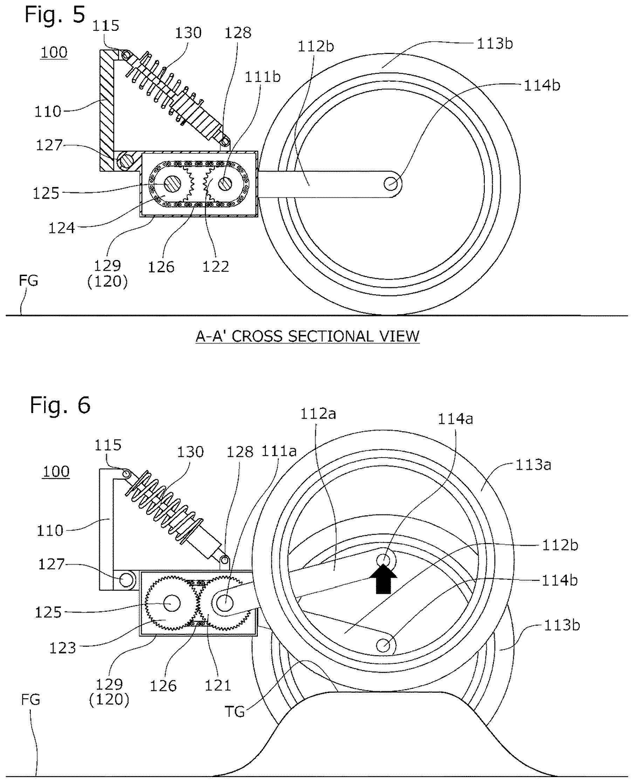

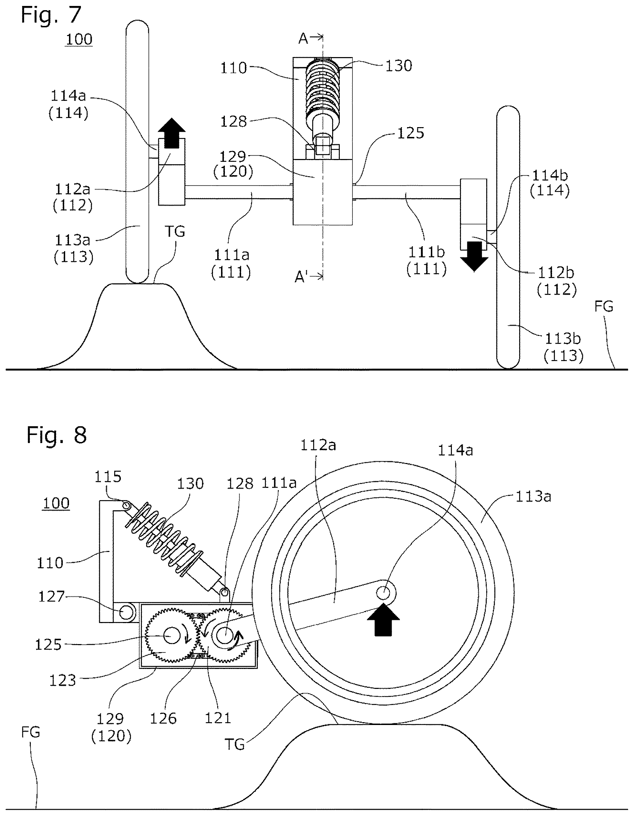

Next, the following describes a method for moving the first wheel 113a and the second wheel 113b in conjunction with each other by the travel unit 100 according to an embodiment of the present invention with reference to FIGS. 6 to 9.

First, when the first wheel 113a of the travel unit 100 runs from a flat surface FG onto a protruding surface TG while traveling on the flat surface FG, the first swing arm 112a swings upward about the first swing shaft 111a.

At this time, the swing gear 121 connected to the first swing arm 112a by the first swing shaft 111a also rotates, and the transmission gear 123 meshing with the swing gear 121 rotates in the direction opposite to the rotation direction of the swing gear 121.

The transmission gear 123 and the transmission sprocket 124 are connected by the coupling shaft 125 coupling the rotation axes thereof, and therefore, the transmission sprocket 124 rotates in the same direction as the transmission gear 123.

The transmission chain 126 is wound around the transmission sprocket 124 and the swing sprocket 122, and therefore, the swing sprocket 122 rotates in the same direction as the transmission sprocket 124, i.e., in the direction opposite to the rotation direction of the swing gear 121.

Accordingly, the second swing arm 112b connected to the swing sprocket 122 by the second swing shaft 111b swings downward, and the second wheel 113b is held in contact with the flat surface FG.

When the travel vehicle further moves and the first wheel 113a moves from the protruding surface TG to the flat surface FG, the first wheel 113a loses the force that caused the first wheel 113a to swing upward, and starts to swing downward together with the first swing arm 112a due to the weight of the first wheel 113a itself.

On the other hand, the second wheel 113b swings upward together with the second swing arm 112b as viewed from the second swing shaft 111b while being in contact with the flat surface FG, and the pair of left and right wheels 113 come into contact with the flat surface FG with the rotation shafts 114 of the wheels 113 extending along a straight line.

As described above, the pair of left and right wheels 113 are configured to swing in mutually opposite directions in conjunction with each other, and therefore, even if one of the wheels 113 runs onto a step or the like, the other wheel 113 can be kept in contact with the ground without the main body 110 tilting significantly, and travel stability can be improved.

Naturally the relationship between the first wheel 113a and the second wheel 113b configured to move in conjunction with each other works not only when the first wheel 113a swings upward. When only the second wheel 113b swings upward, rotation of the swing sprocket 122 is transmitted to the transmission sprocket 124 via the transmission chain 126 and further transmitted to the swing gear 121 meshing with the transmission gear 123, which rotates together with the transmission sprocket 124, and accordingly, the first wheel 113a swings downward.

Also, even if the vehicle body tilts when the travel vehicle turns along a curve, for example, both the first wheel 113a and the second wheel 113b can be brought into contact with the ground and travel stability can be improved.

Note that it is possible to surely cause the first swing arm 112a and the second swing arm 112b to swing by the same amount in different directions in conjunction with each other by setting the gear ratio between the swing gear 121 and the transmission gear 123 to 1:1 and setting the ratio between the number of teeth of the swing sprocket 122 and the number of teeth of the transmission sprocket 124 to 1:1.

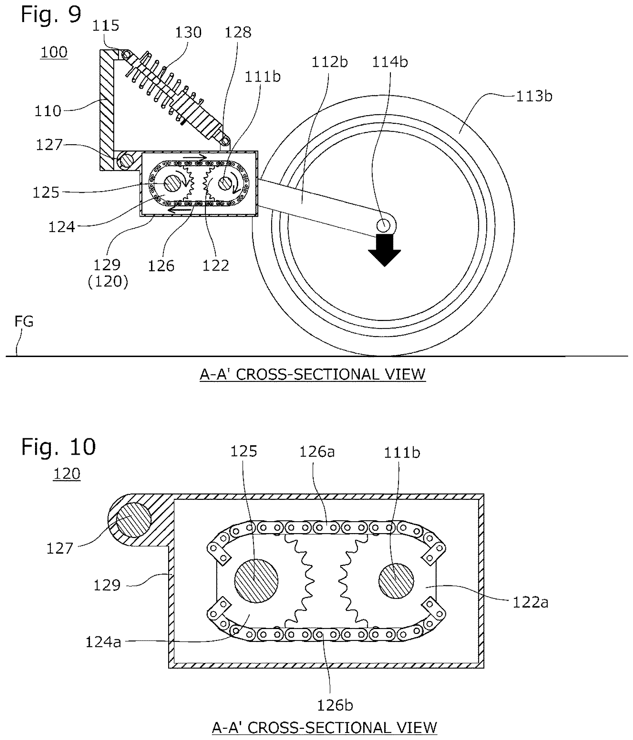

Also, as shown in FIG. 10, by winding a first chain 126a and a second chain 126b having ends, instead of the transmission chain 126, around a swing sprocket 122a and a transmission sprocket 124a whose outer circumferential surfaces include portions that are not provided with teeth, and fixing the chains 126a and 126b to the sprockets 122a and 124a, it is possible to limit rotation amounts of the swing sprocket and the transmission sprocket.

Thus, it is possible to limit the maximum swing amount of the pair of left and right wheels 113, and prevent the wheels 113 from jumping up excessively.

Also, it is unnecessary to provide teeth along the entire outer circumference, as in the swing sprocket 122a and the transmission sprocket 124a, and therefore, it is possible to form notches in the sprockets to reduce the weight of the travel unit 100 and the space required to house the sprockets in the rotation transmission unit 120.

Also, the components of the rotation transmission unit 120 other than exposed portions of the first swing shaft 111a, the second swing shaft 111b, and the coupling shaft 125 are housed in the housing part 129, and therefore, it is possible to prevent grease applied to the components housed in the housing part 129 from flowing to the outside, prevent foreign matter and the like from entering from the outside, and reduce the frequency of maintenance such as greasing up.

Also, operation sound generated due to meshing between the swing gear 121 and the transmission gear 123 and rotation of the transmission chain 126 can be kept from leaking to the outside.

Moreover, the main body 110 and the rotation transmission unit 120 are connected by the swingable connection part and the buffer connection part via the buffer member 130, and therefore, the buffer member 130 can suppress transmission of an impact applied from the ground when the wheels 113 of the travel unit 100 are in contact with the ground, to the main body 110.

Note that the travel unit 100 according to the embodiment of the present invention can be used not only in an automobile provided with an engine and the like, but also in various vehicles that can travel with use of wheels, such as a bicycle driven by human power and a cart for carrying goods.

Although an embodiment of the present invention has been described in detail, the present invention is not limited to the above embodiment, and various design changes can be made without departing from the present invention described in the claims.

In the above embodiment, the wheels of the travel unit function as the rear wheels of the travel vehicle, but the configuration of the travel unit is not limited to this configuration, and the wheels may also be attached in such a manner as to function as front wheels of the travel vehicle, for example.

In the above embodiment, at least the swing gear, the swing sprocket, the transmission gear, the transmission chain, and the transmission sprocket are housed in the housing part, but the configuration of the rotation transmission unit is not limited to this configuration, and a configuration is also possible in which the components of the rotation transmission unit other than the exposed portions of the first swing shaft and the second swing shaft are housed in the housing part, or the housing part is not provided, for example.

In the above embodiment, the transmission chain is wound around the swing sprocket and the transmission sprocket, but the configuration for moving the swing sprocket and the transmission sprocket in conjunction with each other is not limited to this configuration, and an endless belt may also be wound around the swing sprocket and the transmission sprocket, for example.

## Claims

1. A travel unit comprising:
a main body;
a rotation transmission unit connected to the main body;
a pair of left and right swing arms provided on the rotation transmission unit in such a manner as to be swingable about a swing shaft; and
wheels respectively provided on the swing arms, wherein
the rotation transmission unit includes:
a swing gear configured to rotate in conjunction with swing of one of the swing arms;
a swing sprocket configured to rotate in conjunction with swing of the other of the swing arms;
a transmission gear meshing with the swing gear to transmit rotation; and
a transmission sprocket configured to transmit rotation to the swing sprocket via a transmission chain,
the transmission gear and the transmission sprocket are connected by a coupling shaft coupling rotation axes of the transmission gear and the transmission sprocket, and
the swing gear and the swing sprocket are configured to be rotatable in conjunction with each other in mutually opposite directions.

2. The travel unit according to claim 1, wherein
the rotation transmission unit includes a box-like housing part, and
the housing part houses at least the swing gear, the swing sprocket, the transmission gear, the transmission chain, and the transmission sprocket.

3. The travel unit according to claim 1, wherein
the main body and the rotation transmission unit are connected by a swingable connection part for connection in a swingable manner and also connected by a buffer connection part for connection via a buffer member.

4. The travel unit according to claim 1, wherein
the transmission chain is constituted by a chain having an end that is connected to the swing sprocket and another end that is connected to the transmission sprocket.

5. The travel unit according to claim 1, wherein
the transmission chain is an endless chain.

6. A travel vehicle comprising:
a main body;
a front wheel; and
a rear wheel, wherein
at least one of the front wheel and the rear wheel is constituted by the travel unit according to any one of claims 1 to 5.
